# EUROPEAN PATENT SPECIFICATION

(11) **EP 4 548 273 B1**
(45) Date of publication and mention of the grant of the patent: **26.08.2026**
(21) Application number: 23736677.8
(22) Date of filing: 29.06.2023
(51) Int. Cl.: G06N 20/00, G06N 3/094, G06N 3/045, H04L 9/40

(54) **A METHOD TO PREVENT EXPLOITATION OF AN AI MODULE IN AN AI SYSTEM**
VERFAHREN ZUR VERHINDERUNG DER AUSNUTZUNG EINES KI-MODULS IN EINEM KI-SYSTEM
PROCÉDÉ POUR EMPÊCHER L'EXPLOITATION D'UN MODULE AI DANS UN SYSTÈME AI

(30) Priority: 29.06.2022 IN 202241037262
(43) Date of publication of application: 07.05.2025
(73) Proprietor: Robert Bosch GmbH, 70442 Stuttgart (DE); Bosch Global Software Technologies Private Limited, Karnataka, Bangalore 560095 (IN)
(72) Inventor: SHAH, Adit Jignesh, Ahmedabad 380013 (IN); PARMAR, Manojkumar Somabhai, Ahmedabad, Gujarat 38008 (IN); MAURYA, Pankaj Kanta, Umbergaon, Gujarat 396170 (IN); YASH, Mayurbhai Thesia, Ahmedabad Gujarat 380013 (IN)
(74) Representative: Bee, Joachim
(86) International application number: PCT/EP2023/067867
(87) International publication number: WO 2024/003274

(56) References cited:
- EP-A1- 4 006 782
- MIKA JUUTI ET AL: "PRADA: Protecting against DNN Model Stealing Attacks", ARXIV.ORG, CORNELL UNIVERSITY LIBRARY, 201 OLIN LIBRARY CORNELL UNIVERSITY ITHACA, NY 14853, 31 March 2019 (2019-03-31), XP081425461
- GABRIEL RESENDE MACHADO ET AL: "Adversarial Machine Learning in Image Classification: A Survey Towards the Defender's Perspective", ARXIV.ORG, CORNELL UNIVERSITY LIBRARY, 201 OLIN LIBRARY CORNELL UNIVERSITY ITHACA, NY 14853, 8 September 2020 (2020-09-08), XP081758260

## Description

### Field of the invention

The present disclosure relates to the field of artificial intelligence (AI) security. In particular, the present disclosure proposes a method to prevent exploitation of an AI module in an AI system and the system thereof.

### Background of the invention

With the advent of data science, data processing and decision-making systems are implemented using artificial intelligence modules. The artificial intelligence modules use different techniques like machine learning, neural networks, deep learning etc. Most of the AI based systems, receive large amounts of data and process the data to train AI models. Trained AI models generate output based on the use cases requested by the user. Typically, the AI systems are used in the fields of computer vision, speech recognition, natural language processing, audio recognition, healthcare, autonomous driving, manufacturing, robotics etc. where they process data to generate required output based on certain rules/intelligence acquired through training.

To process the inputs and give a desired output, the AI systems use various models/algorithms which are trained using the training data. Once the AI system is trained using the training data, the AI systems use the models to analyze the real time data and generate appropriate result. The models may be fine-tuned in real-time based on the results. The models in the AI systems form the core of the system. Lots of effort, resources (tangible and intangible), and knowledge goes into developing these models.

It is possible that some adversary may try to exploitation/copy/extract the model from AI systems. The adversary may use different techniques to exploitation the model from the AI systems. One of the simple techniques used by the adversaries is where the adversary sends different queries to the AI system iteratively, using its own test data. The test data may be designed in a way to extract internal information about the working of the models in the AI system. The adversary uses the generated results to train its own models. By doing these steps iteratively, it is possible to exploitation the internals of the model and a parallel model can be built using similar logic. This will cause hardships to the original developer of the AI systems. The hardships may be in the form of business disadvantages, loss of confidential information, loss of lead time spent in development, loss of intellectual properties, loss of future revenues etc. Hence there is a need for an AI system that is self-sufficient in averting adversarial attacks and identifying and attack vector.

There are methods known in the prior arts to identify such attacks by the adversaries and to protect the models used in the AI system. The prior art US 20190095629A1- Protecting Cognitive Systems from Model Stealing Attacks discloses one such method. It discloses a method wherein the input data is processed by applying a trained model to the input data to generate an output vector having values for each of the plurality of pre-defined classes. A query engine modifies the output vector by inserting a query in a function associated with generating the output vector, to thereby generate a modified output vector. The modified output vector is then output. The query engine modifies one or more values to disguise the trained configuration of the trained model logic while maintaining accuracy of classification of the input data. Another of such method can be found in MIKA JUUTI ET AL: "PRADA: Protecting against DNN Model Stealing Attacks", which defines a method for protecting DNN models against stealing attacks.

### Brief description of the accompanying drawings

An embodiment of the invention is described with reference to the following accompanying drawings:
Figure 1 depicts an AI system (100) for processing of an input;
Figure 2 illustrates method steps (200) to prevent exploitation of an AI module (12) in an AI system (100).

### Detailed description of the drawings

It is important to understand some aspects of artificial intelligence (AI) technology and artificial intelligence (AI) based systems or artificial intelligence (AI) system. Some important aspects of the AI technology and AI systems can be explained as follows. Depending on the architecture of the implements AI systems may include many components. One such component is an AI module. An AI module with reference to this disclosure can be explained as a component which runs a model. A model can be defined as reference or an inference set of data, which is use different forms of correlation matrices. Using these models and the data from these models, correlations can be established between different types of data to arrive at some logical understanding of the data. A person skilled in the art would be aware of the different types of AI models such as linear regression, naive bayes classifier, support vector machine, neural networks and the like. It must be understood that this disclosure is not specific to the type of model being executed in the AI module and can be applied to any AI module irrespective of the AI model being executed. A person skilled in the art will also appreciate that the AI module may be implemented as a set of software instructions, combination of software and hardware or any combination of the same.

Some of the typical tasks performed by AI systems are classification, clustering, regression etc. Majority of classification tasks depend upon labeled datasets; that is, the data sets are labelled manually in order for a neural network to learn the correlation between labels and data. This is known as supervised learning. Some of the typical applications of classifications are: face recognition, object identification, gesture recognition, voice recognition etc. Clustering or grouping is the detection of similarities in the inputs. The cluster learning techniques do not require labels to detect similarities. Learning without labels is called unsupervised learning. Unlabeled data is the majority of data in the world. One law of machine learning is: the more data an algorithm can train on, the more accurate it will be. Therefore, unsupervised learning models/algorithms has the potential to produce accurate models as training dataset size grows.

As the AI module forms the core of the AI system, the module needs to be protected against attacks. AI adversarial threats can be largely categorized into - model extraction attacks, inference attacks, evasion attacks, and data poisoning attacks. In poisoning attacks, the adversarial carefully inject crafted data to contaminate the training data which eventually affects the functionality of the AI system. Inference attacks attempt to infer the training data from the corresponding output or other information leaked by the target model. Studies have shown that it is possible to recover training data associated with arbitrary model output. Ability to extract this data further possess data privacy issues. Evasion attacks are the most prevalent kind of attack that may occur during AI system operations. In this method, the attacker works on the AI algorithm's inputs to find small perturbations leading to large modifications of its outputs (e.g., decision errors) which leads to evasion of the AI model.

In Model Extraction Attacks (MEA), the attacker gains information about the model internals through analysis of input, output, and other external information. Stealing such a model reveals the important intellectual properties of the organization and enables the attacker to craft other adversarial attacks such as evasion attacks. This attack is initiated through an attack vector. In the computing technology a vector may be defined as a method in which a malicious code/virus data uses to propagate itself such as to infect a computer, a computer system or a computer network. Similarly, an attack vector is defined a path or means by which a hacker can gain access to a computer or a network in order to deliver a payload or a malicious outcome. A model stealing attack uses a kind of attack vector that can make a digital twin/replica/copy of an AI module.

The attacker typically generates random queries of the size and shape of the input specifications and starts querying the model with these arbitrary queries. This querying produces input-output pairs for random queries and generates a secondary dataset that is inferred from the pre-trained model. The attacker then take this I/O pairs and trains the new model from scratch using this secondary dataset. This is black box model attack vector where no prior knowledge of original model is required. As the prior information regarding model is available and increasing, attacker moves towards more intelligent attacks. The attacker chooses relevant dataset at his disposal to extract model more efficiently. This is domain intelligence model-based attack vector. With these approaches, it is possible to demonstrate model stealing attack across different models and datasets.

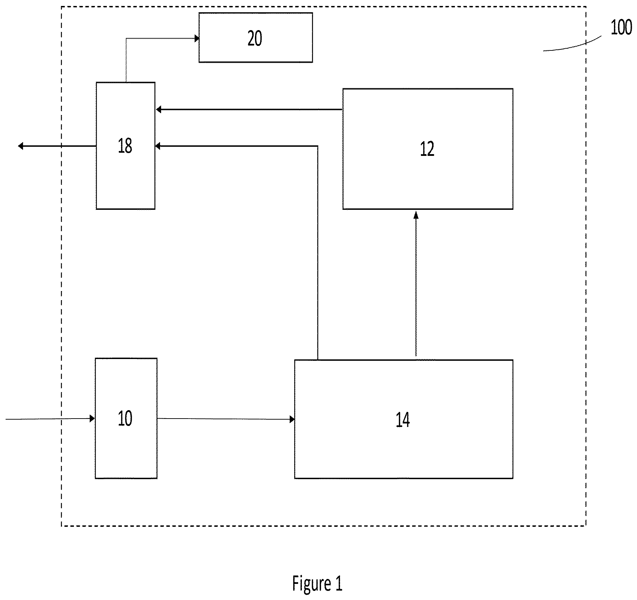

Figure 1 depicts an AI system (100) for processing of an input. The AI system (100) comprises an input interface (10), an output interface (18), an AI module (12), an information gain module, a blocker module (14) and at least a blocker notification module (20). A module with respect to this disclosure can either be a logic circuitry or a software programs that respond to and processes logical instructions to get a meaningful result. A module is implemented as any or a combination of: one or more microchips or integrated circuits interconnected using a parent board, hardwired logic, software stored by a memory device and executed by a microprocessor, microcontrollers, firmware, an application specific integrated circuit (ASIC), and/or a field programmable gate array (FPGA). As explained above, these various modules can either be a software embedded in a single chip or a combination of software and hardware where each module and its functionality is executed by separate independent chips connected to each other to function as the system. For example, a neural network (in an embodiment the AI module (12)) mentioned herein after can be a software residing in the system or the cloud or embodied within an electronic chip. Such neural network chips are specialized silicon chips, which incorporate AI technology and are used for machine learning.

The input interface (10) a hardware interface wherein a user can enter his query for the AI module (12) to process and generate an output. The input interface (10) receives input from at least one user through an audio or visual means. Similarly, the output interface (18) sends an output to said at least one user via an audio or visual means.

The AI module (12) is configured to process said input data. An AI module (12) with reference to this disclosure can be explained as a component which runs a model. A model can be defined as reference or an inference set of data, which is use different forms of correlation matrices. Using these models and the data from these models, correlations can be established between different types of data to arrive at some logical understanding of the data. A person skilled in the art would be aware of the different types of AI models such as linear regression, naive bayes classifier, support vector machine, neural networks and the like. It must be understood that this disclosure is not specific to the type of model being executed in the AI module (12) and can be applied to any AI module (12) irrespective of the AI model being executed. A person skilled in the art will also appreciate that the AI module (12) may be implemented as a set of software instructions, combination of software and hardware or any combination of the same.

The information gain module is configured to calculate an information gain and send the information gain value to a blocker module (14). Information gain is a quantitative analysis of the portion of AI model stolen or compromised due to the impact of an attack vector.

The most important non-limiting feature of the AI system (100) is the functionality of the blocker module (14). The blocker module (14) configured to restrict at least one user. The blocker module (14) is configured to compute a correlation factor amongst a plurality of inputs received from one or more users. The blocker module (14) computes the correlation factor based on a nonlinear feature Mutual Information (MI). The blocker module (14) further compares the computed correlation factor with a pre-determined range of correlation factors. The pre-determined range of correlation factors is computed for training data and correlation of queries in a batch of 50. It finally modifies the output of the AI module (12) in dependance of the said comparison to restrict at least one user.

The blocker notification module (20) to transmit a notification to the owner of said AI system (100). The notification is an audio or visual notification sent to the owner of the AI system (100) as to the AI module (12) being attacked by an adversary or being compromised.

In one embodiment of the architectural framework all the building block of the AI system (100) are implemented in hardware i.e. each building block may be hardcoded onto a microprocessor chip. This is particularly possible when the building blocks are physically distributed over a network, where each building block is on individual computer system across the network. In another embodiment of the architectural framework of the AI system (100) are implemented as a combination of hardware and software i.e. some building blocks are hardcoded onto a microprocessor chip while other building block are implemented in a software which may either reside in a microprocessor chip or on the cloud. Each building block of the AI system (100) in one embodiment would have an individual processor and a memory.

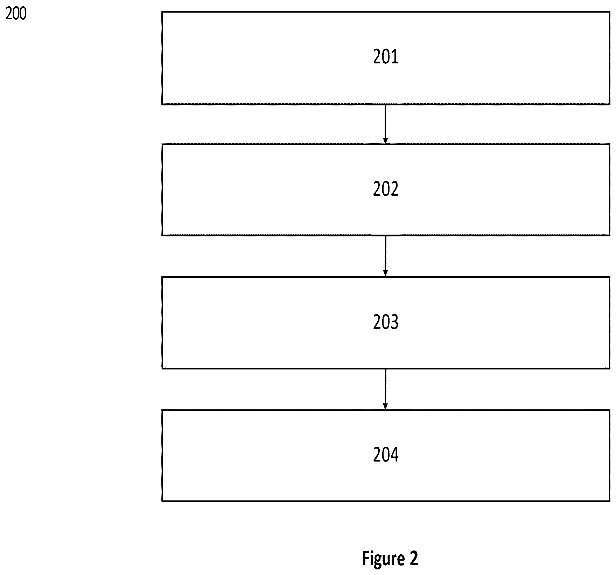

Figure 2 illustrates method steps to prevent exploitation of an AI module (12) in an AI system (100). The AI system (100) and its components have been described in accordance with figure 1. The AI system (100) comprising an input interface (10) to receive input from at least one user; an AI module (12) configured to process said input data; output interface (18) to send an output to said at least one user; a blocker module (14) configured to restrict at least one user; an information gain module configured to calculate an information gain and send the information gain value to the blocker module (14); a blocker notification module (20) to transmit a notification to the owner of said AI system (100).

Method step 201 comprises receiving input data from at least one user through an input interface (10). Method step 202 comprises computing a correlation factor amongst a plurality of inputs received from one or more users by the blocker module (14). The correlation factor is a statistical correlation between a plurality of inputs and their impact on the behavior of the AI model. The correlation factor is based on a non-linear feature Mutual Information (MI).

Method step 203 comprises comparing the computed correlation factor with a pre-determined range of correlation factors stored in the blocker module (14). First a correlation of training data and correlation of queries in a batch of certain size for example a batch of 50 queries is calculated. Then we use the computed training correlation and queries correlation as two vector to further compute the correlation factor between this two vector.

Method step 204 comprises modifying the output of the AI module (12) in dependance of the said comparison to restrict at least one user and prevent exploitation of the AI module (12). In an embodiment of the present disclosure, if the correlation factor is outside of the pre-determined range, then whole batch of inputs (plurality of inputs) will be considered as attack vector. Hence, preventing the exploitation of AI module (12) further comprises rejecting the said plurality of inputs received by means of the blocker module (14). In an alternate embodiment of the present disclosure, rather than blocking or rejecting a plurality of inputs, we send out manipulated outputs. The manipulated output is selected as the lowest probability value class, which is the total opposite of the original prediction. Hence attacker will receive the wrong output and will not be in a position to train or exploit models with reasonable accuracy.

The underlying concept here is that the new data distribution should be closer to the training data distribution. The non-linear mutual information (MI) on which the correlation factor is determined is a simple way to represent it. A person skilled in the art will appreciate that while these method steps describe only a series of steps to accomplish the objectives, these methodologies may be implemented with variation and adaptation to the AI system (100) described herein.

This idea to develop a method to prevent exploitation of an AI module (12) in an AI system (100) induces a faster defense mechanism for the AI module (12). It must be understood that the embodiments explained in the above detailed description are only illustrative and do not limit the scope of this invention. The scope of this invention is limited only by the claims.

## Claims

1. An artificial intelligence (AI) system for processing of an input, the Al system (100) comprising: an input interface (10) to receive input from at least one user; an Al module (12) configured to process said input data; output interface (18) to send an output to said at least one user; an information gain module configured to calculate an information gain and send the information gain value to a blocker module (14) ; a blocker notification module (20) to transmit a notification to the owner of said Al system (100); wherein,
the blocker module (14) is configured to restrict at least one user, the blocker module (14) configured to:
- compute a correlation factor amongst a plurality of inputs received from the at least one user;
- compare the computed correlation factor with a pre-determined range of correlation factors; and
- modify the output of the AI module (12) in dependance of the said comparison to restrict the at least one user;
**characterized in that** the correlation factor is computed based on a nonlinear feature Mutual Information (MI).

2. A method (200) to prevent exploitation of an Al module (12) in an Al system (100), the Al system (100) comprising an input interface (10) to receive input from at least one user; the Al module (12) configured to process said input data; output interface (18) to send an output to said at least one user; a blocker module (14) configured to restrict at least one user; an information gain module configured to calculate an information gain and send the information gain value to the blocker module (14); a blocker notification module (20) to transmit a notification to the owner of said AI system (100), said method comprising the following steps:
receiving (201) input data from the at least one user through an input interface (10);
computing (202) a correlation factor amongst a plurality of inputs received from the at least one user by the blocker module (14),
comparing (203) the computed correlation factor with a pre-determined range of correlation factors stored in the blocker module (14);
modifying (204) the output of the AI module (12) in dependance of the said comparison to restrict the at least one user and prevent exploitation of the Al module (12) ;**characterized in that** computing the correlation factor is based on a non-linear feature Mutual Information (MI).

## Patentansprüche

1. System einer künstlichen Intelligenz (KI-System) zum Verarbeiten einer Eingabe, wobei das KI-System (100) umfasst: eine Eingabeschnittstelle (10) zum Empfangen einer Eingabe von mindestens einem Benutzer; ein KI-Modul (12), das konfiguriert ist zum Verarbeiten der Eingabedaten; eine Ausgabeschnittstelle (18) zum Senden einer Ausgabe an den mindestens einen Benutzer; ein Informationsgewinnmodul, das konfiguriert ist zum Berechnen eines Informationsgewinns und zum Senden des Informationsgewinnwerts an ein Blockermodul (14); ein Blockerbenachrichtigungsmodul (20) zum Übertragen einer Benachrichtigung an den Eigentümer des KI-Systems (100); wobei
das Blockermodul (14) konfiguriert ist, um mindestens einen Benutzer einzuschränken, wobei das Blockermodul (14) konfiguriert ist zum:
- Berechnen eines Korrelationsfaktors unter einer Mehrzahl von Eingaben, die von dem mindestens einen Benutzer empfangen werden;
- Vergleichen des berechneten Korrelationsfaktors mit einem vorbestimmten Bereich von Korrelationsfaktoren; und
- Modifizieren der Ausgabe des KI-Moduls (12) in Abhängigkeit von dem Vergleich, um den mindestens einen Benutzer einzuschränken; **dadurch gekennzeichnet, dass** der Korrelationsfaktor basierend auf nichtlinearen Merkmalstransinformationen (MI) berechnet wird.

2. Verfahren (200) zum Verhindern einer Ausbeutung eines KI-Moduls (12) in einem KI-System (100), wobei das KI-System (100) umfasst: eine Eingabeschnittstelle (10) zum Empfangen einer Eingabe von mindestens einem Benutzer; das KI-Modul (12), das konfiguriert ist zum Verarbeiten der Eingabedaten; eine Ausgabeschnittstelle (18) zum Senden einer Ausgabe an den mindestens einen Benutzer; ein Blockermodul (14), das konfiguriert ist, um mindestens einen Benutzer einzuschränken; ein Informationsgewinnmodul, das konfiguriert ist zum Berechnen eines Informationsgewinns und zum Senden des Informationsgewinnwerts an das Blockermodul (14); ein Blockerbenachrichtigungsmodul (20) zum Übertragen einer Benachrichtigung an den Eigentümer des KI-Systems (100); wobei das Verfahren die folgenden Schritte umfasst:
Empfangen (201) von Eingabedaten von dem mindestens einen Benutzer über eine Eingabeschnittstelle (10);
Berechnen (202), durch das Blockermodul (14), eines Korrelationsfaktors unter einer Mehrzahl von Eingaben, die von dem mindestens einen Benutzer empfangen werden;
Vergleichen (203) des berechneten Korrelationsfaktors mit einem vorbestimmten Bereich von Korrelationsfaktoren, die in dem Blockermodul (14) gespeichert sind;
Modifizieren (204) der Ausgabe des KI-Moduls (12) in Abhängigkeit von dem genannten Vergleich, um den mindestens einen Benutzer einzuschränken und um eine Ausbeutung des KI-Moduls (12) zu verhindern; **dadurch gekennzeichnet, dass** das Berechnen des Korrelationsfaktors auf nichtlinearen Merkmalstransinformationen (MI) beruht.

## Revendications

1. Système d'intelligence artificielle (AI) pour le traitement d'une entrée, le système AI (100) comprenant : une interface d'entrée (10) pour recevoir une entrée en provenance d'au moins un utilisateur ; un module AI (12) configuré pour traiter lesdites données d'entrée ; une interface de sortie (18) pour envoyer une sortie audit au moins un utilisateur ; un module de gain d'informations configuré pour calculer un gain d'informations et envoyer la valeur de gain d'informations à un module bloqueur (14) ; un module de notification de bloqueur (20) pour transmettre une notification au propriétaire dudit système AI (100) ; dans lequel,
le module bloqueur (14) configuré pour restreindre au moins un utilisateur, le module bloqueur (14) étant configuré pour :
- calculer un facteur de corrélation parmi une pluralité d'entrées reçues en provenance de l'au moins un utilisateur ;
- comparer le facteur de corrélation calculé avec un éventail prédéterminé de facteurs de corrélation ; et
- modifier la sortie du module AI (12) en fonction de ladite comparaison pour restreindre l'au moins un utilisateur ; **caractérisé en ce que** le facteur de corrélation est calculé sur la base d'une information mutuelle (MI) de caractéristique non linéaire.

2. Procédé (200) pour empêcher l'exploitation d'un module AI (12) dans un système AI (100), le système AI (100) comprenant une interface d'entrée (10) pour recevoir une entrée en provenance d'au moins un utilisateur ; le module AI (12) configuré pour traiter lesdites données d'entrée ; interface de sortie (18) pour envoyer une sortie audit au moins un utilisateur ; un module bloqueur (14) configuré pour restreindre au moins un utilisateur ; un module de gain d'informations configuré pour calculer un gain d'informations et envoyer la valeur de gain d'informations au module bloqueur (14) ; un module de notification de bloqueur (20) pour transmettre une notification au propriétaire dudit système AI (100), ledit procédé comprenant les étapes suivantes :
recevoir (201) des données d'entrée en provenance de l'au moins un utilisateur par l'intermédiaire d'une interface d'entrée (10) ;
calculer (202) un facteur de corrélation parmi une pluralité d'entrées reçues en provenance de l'au moins un utilisateur par le module bloqueur (14),
comparer (203) le facteur de corrélation calculé avec un éventail prédéterminé de facteurs de corrélation stockés dans le module bloqueur (14) ;
modifier (204) la sortie du module AI (12) en fonction de ladite comparaison pour restreindre l'au moins un utilisateur et empêcher l'exploitation du module AI (12) ; **caractérisé en ce que** le calcul du facteur de corrélation est basé sur une information mutuelle (MI) de caractéristique non linéaire.
